(19) Europäisches Patentamt
European Patent Office
Office européen des brevets

(11) **EP 3 871 120 B1**

(12) **EUROPEAN PATENT SPECIFICATION**

(45) Date of publication and mention
of the grant of the patent:
**14.08.2024   Bulletin 2024/33**

(21) Application number: **18830775.5**

(22) Date of filing: **17.12.2018**

(51) International Patent Classification (IPC):
*G06F 17/18* (2006.01)     *G06N 20/00* (2019.01)

(52) Cooperative Patent Classification (CPC):
**G06F 17/18; G06N 3/044; G06N 3/045;
G06N 3/088;** G06N 3/048

(86) International application number:
**PCT/EP2018/085257**

(87) International publication number:
**WO 2020/125929 (25.06.2020 Gazette 2020/26)**

(54) **APPARATUS AND METHOD FOR DETECTING AN ANOMALY AMONG SUCCESSIVE EVENTS
AND COMPUTER PROGRAM PRODUCT THEREFOR**

VORRICHTUNG UND VERFAHREN ZUR DETEKTION EINER ANOMALIE ZWISCHEN
AUFEINANDERFOLGENDEN EREIGNISSEN UND COMPUTERPROGRAMMPRODUKT DAFÜR

APPAREIL ET PROCÉDÉ DE DÉTECTION D'UNE ANOMALIE PARMI DES ÉVÉNEMENTS
SUCCESSIFS ET PRODUIT-PROGRAMME D'ORDINATEUR ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.09.2021   Bulletin 2021/35**

(73) Proprietor: **Huawei Cloud Computing
Technologies Co., Ltd.
Guizhou 550025 (CN)**

(72) Inventors:
• **NEDELKOSKI, Sasho
10623 Berlin (DE)**
• **CARDOSO, Jorge
80992 Munich (DE)**

(74) Representative: **Epping - Hermann - Fischer
Patentanwaltsgesellschaft mbH
Schloßschmidstraße 5
80639 München (DE)**

(56) References cited:
**US-A1- 2018 039 555**

• **JONATHAN OHLSSON: "Anomaly Detection in
Microservice Infrastructures", MASTER'S
THESIS, 28 May 2018 (2018-05-28), XP055613594,
Retrieved from the Internet
<URL:http://www.nada.kth.se/~ann/exjobb/jonat
han_ohlsson.pdf> [retrieved on 20190819]**

**Description**

TECHNICAL FIELD

The present disclosure relates to the field of data processing, and more particularly to an apparatus and method for detecting an anomaly among successive events by using deep learning technologies, as well as to a corresponding computer program product.

BACKGROUND

Anomaly detection algorithms are being applied more frequently to identify the unstable or anomalous behavior of different systems used in a variety of fields of human activity. For this purpose, values of one or more parameters characterizing a system of interest are monitored and analyzed over time, upon which a normal behavior model is generated for the system of interest. When next-in-time values of the same one or more parameters are found to deviate from the normal behavior model, it is concluded that the system of interest becomes unstable. A system operator may then use this information to take necessary measures with respect to the system of interest. Examples of such a system of interest may include a software or hardware system in which malfunctions are to be detected, a stock market at which anomalies in stock quote prices are to be detected, a communication system in which anomalous data communications are to be detected, and so on.

Conventionally, linear statistical methods, such as autoregressive integrated moving average (ARIMA), Holt-Winters, and Seasonal and Trend decomposition using Loess (STL), have been used to analyse time series of system parameters to detect anomalies. However, these methods have been found to work well only for rather simple time series which are relatively stationary, with a single seasonality frequency, with a single underlying distribution, and with a low noise to signal ratio (for example, the evolution of stock quote prices or the birth rate of populations). Furthermore, these methods are typically applied manually by setting several method parameters.

Thus, problems with the linear statistical methods occur when the time series to be analysed are characterized by non-stationarity, multiple seasonality frequencies, multiple underlying distribution, and a high noise to signal ratio. Such time series are peculiar to complex, distributed and unpredictable systems, such, for example, as a microservice application platform in which microservice applications communicate with each other to perform particular tasks.

Therefore, there is still a need for a new solution that allows mitigating or even eliminating the above-mentioned drawbacks peculiar to the prior art.

US 2018/039555 A1 discloses systems and methods for performing unsupervised baselining and anomaly detection using time-series data. A baselining and anomaly detection system receives a set of time-series data. Based on the set of time-series, the system generates a first interval that represents a first distribution of sample values associated with the first seasonal pattern and a second interval that represents a second distribution of sample values associated with the second seasonal pattern. The system then monitors a time-series signals using the first interval during a first time period and the second interval during a second time period. In response to detecting an anomaly in the first seasonal pattern or the second seasonal pattern, the system generates an alert.

SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object of the present disclosure to provide a technical solution for detecting the anomaly in any time series, including those generated by complex, distributed and unpredictable systems, while minimizing user involvement.

The object above is achieved by the features of the independent claims in the appended claims. Further embodiments and examples are apparent from the dependent claims, the detailed description and the accompanying drawings. In the following, parts of the description and drawings referring to embodiments which are not covered by the claims are not presented as embodiments of the invention, but as examples useful for understanding the invention.

According to a first aspect, a method for detecting an anomaly among successive events is provided. The method is performed as follows. At first, each new event is logged by producing a pair of an event property and an associated property value. After that, the pairs with the same event properties are grouped into a current time series. Next, the following features are retrieved from the current time series: signal features indicative of a change pattern of the property values, contextual features indicative of a context where each of the same event properties has been occurred, and temporal features indicative of a time correlation among the property values. The signal features, the contextual features, and the temporal features are combined into a feature vector. Further, it is checked whether the feature vector of the current time series corresponds to a pre-stored baseline model. The baseline model is obtained based on an unsupervised machine learning algorithm using the feature vectors of multiple past time series comprising the same event properties as the current time series. Finally, the current time series is associated with the anomaly if there is a lack of correspondence between the feature vector and the baseline model. This allows the anomaly to be detected in the time series quickly and automatically even if the time series is characterized by non-stationarity, multiple seasonality frequencies, multiple underlying distribution, and a high noise to signal ratio.

Further, the events are related to microservice applications. This provides increased flexibility in the use of the method according to the first aspect.

In one implementation form of the first aspect, the signal features are retrieved by performing the following actions: removing outliers from the current time series; converting the current time series to a normally distributed and normalized dataset; and applying a noise reduction operation to the dataset to retrieve the change pattern of the property values. This allows increasing the accuracy of anomaly detection.

In one implementation form of the first aspect, the unsupervised machine learning algorithm is performed by using at least one recurrent neural network. By doing so, the accuracy of anomaly detection is increased even more because this type of neural networks allows taking into account a plurality of different past time series when analyzing the abnormality of the current time series.

In one implementation form of the first aspect, the current time series is checked for correspondence to the baseline model as follows. At first, a restored feature vector is produced based on the baseline model. Then, a distance between the restored feature vector and the feature vector of the current time series is estimated. Finally, if the distance is above a predefined threshold, it is determined that there is a lack of correspondence between the feature vector of the current time series and the baseline model. This allows additionally increasing the accuracy of anomaly detection.

In one implementation form of the first aspect, the method further comprises: receiving a user input comprising predefined anomaly patterns each characterizing a certain anomaly type; obtaining a recognition model based on a supervised machine learning algorithm using the predefined anomaly patterns and different variations of the predefined anomaly patterns, the recognition model defining a mapping between the anomaly patterns and associated time series; recognizing the anomaly type associated with the current time series based on the recognition model. This provides the possibility of recognizing the anomaly type peculiar to the current time series.

In one implementation form of the first aspect, the supervised machine learning algorithm is performed by using at least one convolutional neural network. This allows increasing the possibility of recognizing the anomaly type peculiar to the current time series.

In one implementation form of the first aspect, the anomaly type associated with the current time series is recognized as follows. At first, the current time series is divided into multiple time segments by using a sliding window having a predefined size. After that, at least one anomaly pattern is detected among time segments by using the recognition model. Each of the at least one anomaly pattern is provided with a measure of belief. Next, the at least one anomaly pattern is ranked by the measure of belief. Finally, the first-in-rank anomaly pattern is selected for the current time series. This allows associating the most probable anomaly pattern with the current time series.

In one implementation form of the first aspect, the method further comprising: i) providing the first-in-rank anomaly pattern with a positive label if the first-in-rank anomaly pattern is selected correctly; or ii) providing the first-in-rank anomaly pattern with a negative label if the first-in-rank anomaly pattern is selected incorrectly and the rest of the ranked anomaly patterns are detected incorrectly; iii) or reselecting any one of the rest of the ranked anomaly patterns for the current time series if the first-in-rank anomaly pattern is selected incorrectly. This provides feedback to a user, which may be used to update the recognition model.

In one implementation form of the first aspect, the method further comprises, if a number of times when any one or more of steps i)-iii) above occur exceeds a predefined threshold, modifying the recognition model based on the supervised machine learning algorithm using the selected first-in-rank anomaly patterns. This allows refining the recognition model.

According to a second aspect, an apparatus for detecting an anomaly among successive events is provided. The apparatus comprises at least one processor and a memory coupled to the at least one processor. The memory stores processor-executable instructions which, when executed by the at least one processor, cause the at least one processor to: log each new event by producing a pair of an event property and an associated property value; group the pairs with the same event properties into a current time series; retrieve, from the current time series, signal features indicative of a change pattern of the property values, contextual features indicative of a context where each of the same event properties has been occurred, and temporal features indicative of a time correlation among the property values; combine the signal features, the contextual features, and the temporal features into a feature vector; check whether the feature vector of the current time series corresponds to a pre-stored baseline model, the baseline model being obtained based on unsupervised machine learning algorithm using the feature vectors of multiple past time series comprising the same event properties as the current time series; and associate the current time series with the anomaly if there is a lack of correspondence between the feature vector and the baseline model. This allows the anomaly to be detected in the time series quickly and automatically even if the time series is characterized by non-stationarity, multiple seasonality frequencies, multiple underlying distribution, and a high noise to signal ratio. Further, the events are related to microservice applications. This provides increased flexibility in the use of the apparatus according to the second aspect.

In one implementation form of the second aspect, the at least one processor is configured to retrieve the signal features by: removing outliers from the current time series; converting the current time series to a normally distributed and normalized dataset; and applying a noise reduction operation to the dataset to retrieve the change pattern of the property values. This allows increasing the accuracy of anomaly detection.

In one implementation form of the second aspect, the at least one processor is further configured to preliminarily obtain the baseline model by using at least one recurrent neural network in the unsupervised machine learning algorithm. By doing so, the accuracy of anomaly detection is increased even more because this type of neural networks allows taking into account a plurality of different past time series when analyzing the abnormality of the current time series.

In one implementation form of the second aspect, the at least one processor is configured to check whether the feature vector of the current time series corresponds to a pre-stored baseline model by: producing a restored feature vector based on the baseline model; estimating a distance between the restored feature vector and the feature vector of the current time series; and if the distance is above a predefined threshold, determining that there is a lack of correspondence between the feature vector of the current time series and the baseline model. This allows additionally increasing the accuracy of anomaly detection.

In one implementation form of the second aspect, the at least one processor is configured to: receive a user input comprising predefined anomaly patterns each characterizing a certain anomaly type; obtain a recognition model based on a supervised machine learning algorithm using the predefined anomaly patterns and different variations of the predefined anomaly patterns, the recognition model defining a mapping between the anomaly patterns and associated time series; recognize the anomaly type associated with the current time series based on the recognition model. This provides the possibility of recognizing the anomaly type peculiar to the current time series.

In one implementation form of the second aspect, the at least one processor is configured to use at least one convolutional neural network in the supervised machine learning algorithm. This allows increasing the possibility of recognizing the anomaly type peculiar to the current time series.

In one implementation form of the second aspect, the at least one processor is configured to recognize the anomaly type by: dividing the current time series into multiple time segments by using a sliding window having a predefined size; detecting at least one anomaly pattern among time segments by using the recognition model, each of the at least one anomaly pattern being provided with a measure of belief; ranking the at least one anomaly pattern by the measure of belief; and selecting the first-in-rank anomaly pattern for the current time series. This allows associating the most probable anomaly pattern with the current time series.

In one implementation form of the second aspect, the at least one processor is further configured to: i) provide the first-in-rank anomaly pattern with a positive label if the first-in-rank anomaly pattern is selected correctly; or ii) provide the first-in-rank anomaly pattern with a negative label if the first-in-rank anomaly pattern is selected incorrectly and no other anomaly pattern is detected; or iii) reselect the next-in-rank anomaly pattern for the current time series if the first-in-rank anomaly pattern is selected incorrectly. This provides feedback to a user, which may be used to update the recognition model.

In one implementation form of the second aspect, the at least one processor is further configured, if a number of times when any one or more of operations i)-iii) above occur exceeds a predefined threshold, to modify the recognition model based on the supervised machine learning algorithm using the selected first-in-rank anomaly patterns. This allows refining the recognition model.

According to a third aspect, a computer program product comprising a computer-readable storage medium storing a computer program. The computer program, when executed by at least one processor, causes the at least one processor to perform the method according to the first aspect. Thus, the method according to the first aspect can be embodied in the form of the computer program, thereby providing flexibility in the use thereof.

Other features and advantages of the present disclosure will be apparent upon reading the following detailed description and reviewing the accompanying drawings.

BRIEF DESCRIPTION OF THE DRAWINGS

The essence of the present disclosure is explained below with reference to the accompanying drawings in which:

Fig. 1 shows an exemplary block scheme of an apparatus for detecting an anomaly among successive events in accordance with one aspect of the present disclosure;

Fig. 2 shows an exemplary block-scheme of a method for detecting the anomaly among the successive events in accordance with another aspect of the present disclosure;

Fig. 3 shows an exemplary microservice application platform, with which the apparatus from Fig. 1 is connected to perform the method from Fig. 2;

Fig. 4 shows one example of a span containing multiple fields;

Fig. 5 shows a dependence of spans' duration on spans' timestamps for one time series;

Fig. 6 shows a pipeline flowchart for implementing steps S206 and S208 of the method from Fig. 2;

Figs. 7A-7D illustrate how the implicit grouping of spans may improve the accuracy of anomaly detection:

Fig. 8 shows one example of applying a sliding window to the time series;

Fig. 9 shows an exemplary architecture of a recurrent neural network used to obtain a baseline model;

Fig. 10 shows a flowchart for implementing step S210 of the method from Fig. 2;

Fig. 11 shows an exemplary flowchart for obtaining a recognition model based on user-defined anomaly patterns and their variations;

Fig. 12 shows some example of user-defined anomaly patterns;

Fig. 13 shows an exemplary flowchart for recognizing the anomaly associated with the time series.

## DETAILED DESCRIPTION

Various embodiments of the present disclosure are further described in more detail with reference to the accompanying drawings. However, the present disclosure can be embodied in many other forms and should not be construed as limited to any certain structure or function provided in the following description. In contrast, these embodiments are provided to make the description of the present disclosure detailed and complete.

According to the detailed description, it will be apparent to ones skilled in the art that the scope of the present disclosure encompasses any embodiment disclosed herein, irrespective of whether this embodiment is implemented independently or in concert with any other embodiment of the present disclosure. For example, the apparatus and method disclosed herein can be implemented in practice by using any numbers of the disclosed embodiments. Furthermore, it should be understood that any of the disclosed embodiments can be implemented using one or more of the elements or steps presented in the appended claims.

As used herein, the term "anomaly" and its derivatives, such as "anomalous", "abnormal", etc., refer to something that deviates from what is standard or normal. More specifically, the present disclosure is aimed at detecting the anomaly in a time series consisting of values of one or more parameters characterizing a system of interest. Although the present disclosure is further provided with reference to a microservice application platform, it should not be construed as any limitation of the present disclosure, and the microservice application platform is selected only as one example of such a system of interest. The other examples of the system of interest may include a lighting system in which operational data, such, for example, as consumed power, of each lighting apparatus are to be analyzed for anomalies, or a stock market at which the anomaly detection relates, for example, to the detection of fraudulent pump and dump on stocks, or the like. In other words, the aspects of the present disclosure may be equally applied to different fields of human activity where the anomaly detection is required.

As used herein, the term "microservice applications", or "microservices" in short, refers to an approach to application development in which a large application is built as a suite of modular components or services. Each modular component or service supports a specific task or business goal and uses a simple, well-defined interface, such as an application programming interface (API), to communicate with other sets of services.

Time series are usually analysed for anomalies by means of the well-known linear statistical methods, such as ARIMA, Holt-Winters, and Seasonal and Trend decomposition using Loess (STL). However, the linear statistical methods require several parameters to be set manually, i.e. require user involvement. Furthermore, the linear statistical methods have specific requirements affecting the type of time series that can be analysed. For example, the ARIMA method requires the time series to be stationary and ergodic after differentiation (i.e. a mean value, its moments and variance, do not change over time). As for the Holt-Winters method, it is also difficult to automate because it comprises a forecast equation and several smoothing equations for a signal level, trend, seasonal component. The STL method in turn requires setting a trend-cycle and seasonal windows, which is complex for time series with a high noise to signal ratio. Thus, the existing linear statistical methods are generally suitable for rather simple time series that are relatively stationary, with a single seasonality frequency, with a single underlying distribution, and with the low noise to signal ratio. This makes these methods unsuitable for automatically analysing complex, distributed and unpredictable systems, such, for example, as the microservice application platform.

To address the above-indicated drawbacks, researchers have tried to develop alternative optimization methods which would allow analysing thousands of time series automatically (i.e. without complex manual parameterizations). However, the optimization methods, such as maximum likelihood estimation (MLE) or minimization of conditional sum-of-squares (CSS) for the ARIMA method, are inaccurate and do not tell anything about the quality of method estimates, nor about how well a method can make useful predictions from the estimates. Thus, manual intervention is still required. While the automatic parametrization of the ARIMA method has been proposed, it is prone to large trend errors when there is a change in a trend near a cut-off period, and it often fails to capture seasonality.

Given the above, the development of a solution for detecting and recognizing the unstable behaviour of the microservice application platform is not trivial and cannot be solved easily by exploiting the existing methods. The major sources of difficulties emerge due to the high noise to signal ratio, the presence of multiple seasonal frequencies and multiple underlying distributions, and the large number of distinct time series generated by the microservice applications. The noise to signal ratio is typically very high since many different components affect the response time of the microservice applications, such as switches, routers, memory capacity, CPU performance, programming languages, thread and process concurrency, bugs, volume of user requests, etc. The multiple seasonal frequencies are correlated with system and user behaviour since request patterns are different, e.g., from hour to hour due to business operation hours, from day to day due to system maintenance tasks, and from month to month due to cyclic patterns.

The aspects of the present disclosure have been developed taking into account the challenge sounded above. In particular, the aspects of the present disclosure involve using a deep learning model under a real-time system architecture in order to detect and recognize the anomaly in the time series. This deep learning model uses, as inputs, salient features of the time series, and captures multiple seasonality, trends and distributions which typically occur during the operation of the microservice applications. When the anomaly is detected, its type is recognized based on predefined anomaly patterns and their variations.

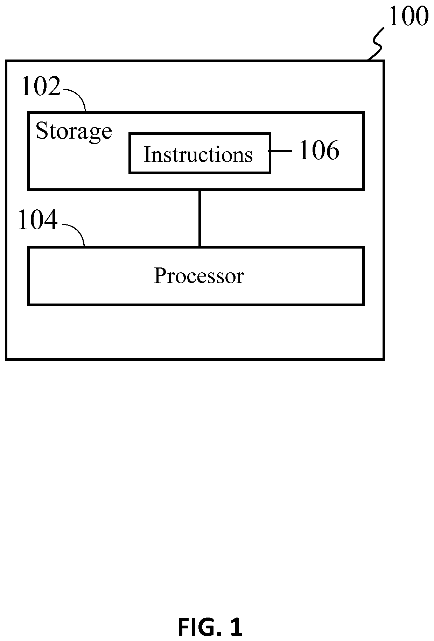

Fig. 1 shows an exemplary block scheme of an apparatus 100 for detecting an anomaly among successive events, for example, generated by the microservice applications, in accordance with one aspect of the present disclosure. As shown in Fig. 1, the apparatus 100 comprises a storage 102 and a processor 104 coupled to the storage 102. The storage 102 stores executable instructions 106 to be executed by the processor 104 to detect the anomaly among the events.

The storage 102 may be implemented as a volatile or nonvolatile memory used in modem electronic computing machines. Examples of the nonvolatile memory include Read-Only Memory (ROM), flash memory, ferroelectric Random-Access Memory (RAM), Programmable ROM (PROM), Electrically Erasable PROM (EEPROM), solid state drive (SSD), magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

Relative to the processor 104, it may be implemented as a central processing unit (CPU), general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 104 may be implemented as any combination of one or more of the aforesaid. As an example, the processor 104 may be a combination of two or more microprocessors.

The executable instructions 106 stored in the storage 102 may be configured as a computer executable code which causes the processor 104 to perform aspects of the present disclosure. The computer executable code for carrying out operations or steps for aspects of the present disclosure may be written in any combination of one or more programming languages, such as Java, C++ or the like. In some examples, the computer executable code may be in the form of a high level language or in a pre-compiled form, and be generated by an interpreter (also pre-stored in the storage 102) on the fly.

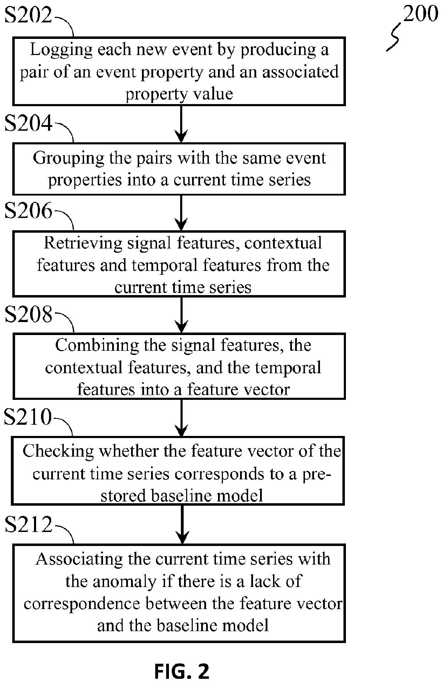

Fig. 2 shows an exemplary block-scheme of a method 200 for detecting the anomaly among the successive events in accordance with another aspect of the present disclosure. The method 200 is intended to be performed by the processor 104 of the apparatus 100 when executing the executable instructions 106. The method 200 comprises steps S202-S212. The processor 104 is first instructed, in the step S202, to log each new event by producing a pair of an event property and an associated property value. After that, the processor 104 is instructed, in the step S204, to group the pairs with the same event properties into a current time series. Next, in the step S206, the processor 104 retrieves the following features from the current time series: signal features indicative of a change pattern of the property values, contextual features indicative of a context where each of the same event properties has been occurred, and temporal features indicative of a time correlation among the property values. The signal features, the contextual features, and the temporal features are combined by the processor 104 into a feature vector in the step S208. Further, in the step S210, the processor 104 checks whether the feature vector of the current time series corresponds to a pre-stored baseline model. The baseline model is obtained based on an unsupervised machine learning algorithm using the feature vectors of multiple past time series comprising the same event properties as the current time series. Finally, the processor 104 is instructed, in the step S212, to associate the current time series with the anomaly if there is a lack of correspondence between the feature vector and the baseline model. Each of the steps S202-S212 will be now described in more detail with regard to the microservice applications.

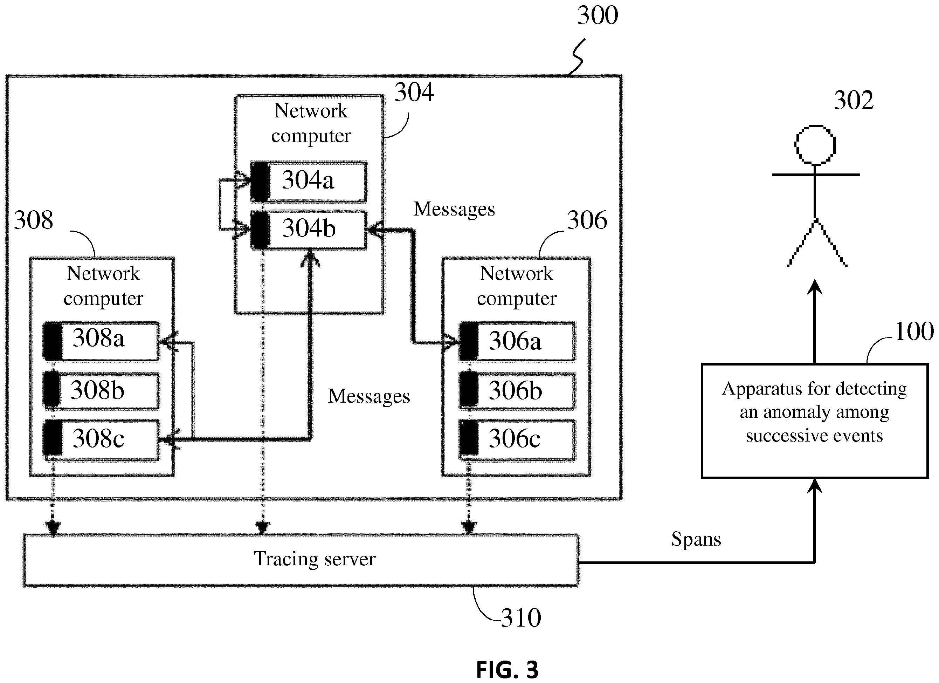

In particular, Fig. 3 shows an exemplary microservice application platform 300, with which the apparatus 100 is connected to perform the method 200 with respect to the microservice applications. The microservice application platform 300 is used to provide a certain service to an end user or client 302. This provision requires data or message communications and interaction (shown as double-headed arrows in Fig. 3) between multiple microservice applications implemented in network computers 304-308. In this example, two microservice applications 304a and 304b are implemented in the network computer 304, three microservice applications 306a-306c are implemented in the network computer 306, and three microservice applications 308a-308c are implemented in the network computer 308. Each microservice application in each computer network executes a specific and valuable function. Furthermore, the microservice applications are configured to generate tracing data by using tracing library clients (shown as black boxes in Fig. 3). The tracing data are composed of the so-called spans. The spans contain a wealth of information that may be wisely used to detect the anomaly occurred in the operation of the microservice applications. In general, each span characterises a particular event generated by the microservice application, and is a pair of property-value ($p_i$, $v_i$) describing the state, performance, and other characteristics of the microservice application at a given time $t_i$. For example, if the property is a duration (i.e. response time) characterizing intra-microservice calls and its value suddenly increases at times $t_i$, $t_{i+1}$, $t_{i+2}$, this may indicate a problem with the microservice applications. The spans are sent by the tracing library clients to a tracing server 310 (see dashed arrows in Fig. 3), which in turn forwards them to the apparatus 100 for further use. In one embodiment, the spans may be transmitted from the tracing server 310 to the apparatus 100 by using Advanced Message Queuing Protocol (AMQP) standards as an asynchronous communication model.

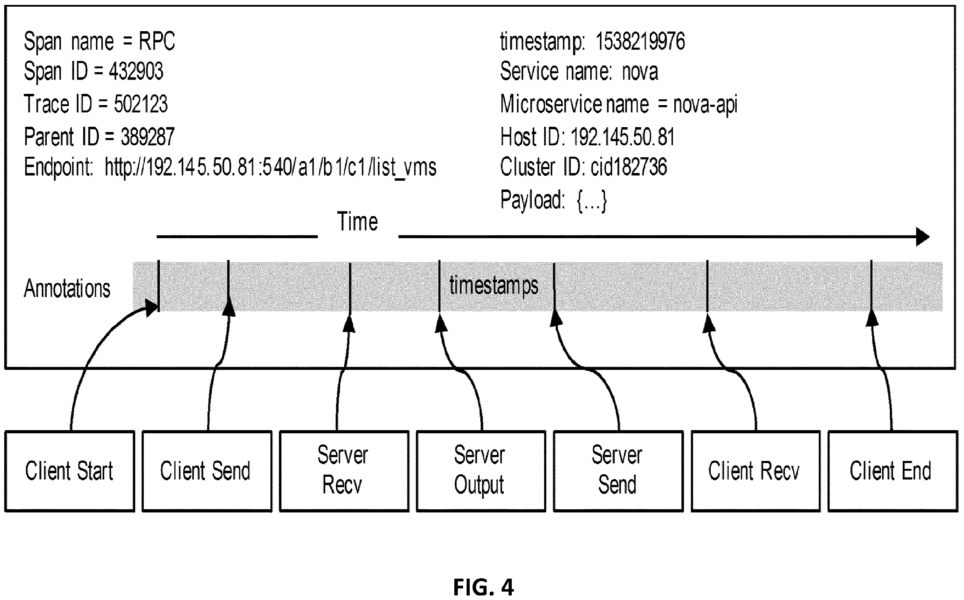

Fig. 4 shows one example of the span containing multiple fields, such as: *span_name*, *span_ID*, *Trace_ID*, *Parent_ID*, *endpoint*, *timestamp*, *duration*, *host_IP*, *http_url*, *microservice_name*, *service_name*, etc. Each of these fields may be additionally used by the processor 104 of the apparatus 100 to increase the accuracy of the anomaly detection, as will be shown further. As follows from Fig. 4, the exemplary span is also provided with *annotations* which are added by the microservice applications to the spans to describe the processing the microservice applications have done. Each annotation can be associated with a timestamp to identify when the processing or action has been conducted. Examples of the annotations include exceptions, errors, parameters passed to remote functions, Structured Query Language (SQL) statements issues to databases, tenant data, etc.

Turning back to the method 200, the step S202 substantially represents the above-described distributed tracing operation aimed at producing the spans characterizing each new event generated by the microservice applications. In the step S204, the spans of the same type, or, in other words, the pairs with the same property, are grouped together to form a cluster or time series $\{X_1,X_2,...,X_T\}$, where the subscript indicates time and $X_i$ is the associated span ($p_i$, $v_i$). At the same time, said grouping may be efficiently refined, further in the step S210, by taking into account the other characteristics of the spans, such as those shown in the fields in Fig. 4, i.e. *timestamp*, *duration*, *host_IP*, *http_url*, *microservice_name*, *service_name*, etc., as will be described later. This refined grouping provides several benefits: it groups the spans which are more similar to each other under the same time series than to those in other time series; it reduces the number of different time series which need to be analysed; and it increases the length of time series making them content-richer with regard to the analysis for the presence of anomalies. After the grouping in the step S204, the spans are provided with their *cluster_ID* for further processing.

In one embodiment, the spans may be additionally grouped based on their endpoints, i.e. their *http_url.* For example, the following endpoints:

- /v2/07fbe5487fd54345b37e3106098f9595/servers/3b5add0a-7dlc-4440-bb7f-158cc38cle4f,

- /v2/830058a3dc53414d85e2daf23853b91b/servers/54b431c8-18c7-462c-8bac-55b1d9f94498,

- /v2/ed43d1006b5044a499431fa9284791ae/servers/4aad6b4e-e870-4c2c-a69a-e088aa20c29e,

may be assigned to *cluster_id*: '/v2/{tenant_id}/servers/{server_id}' by using the following regular expression:

- '/v2/[0-9a-f]{32}/servers/[0-9a-f]{8}\-[0-9a-f]{4}\-[0-9a-f]{4}\-[0-9a-f]{4}\-[0-9a-f]{12}\Z'.

The same procedure is done with the other groups of the spans, such as:

- {host}/v1.0/{project_id}/groups/{group_id}/logs.

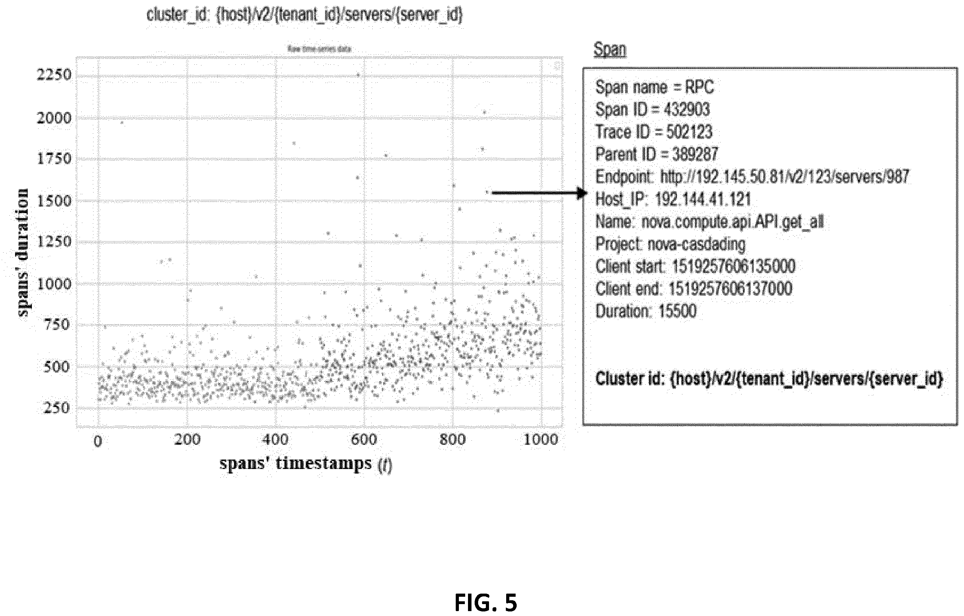

As an example, Fig. 5 shows a time series of spans formed by spans' timestamps on the x-axis and spans' duration on the y-axis for the following *cluster_id*: {host}/v2/{tenant_id}/servers/{server_id}. For clarity, what is also shown in Fig. 5 is the exemplary additional fields of one span from the same time series (see the insert indicated by the arrow). It should be noted that the duration values are given in milliseconds in Fig. 5 and succeeding figures illustrating similar dependences.

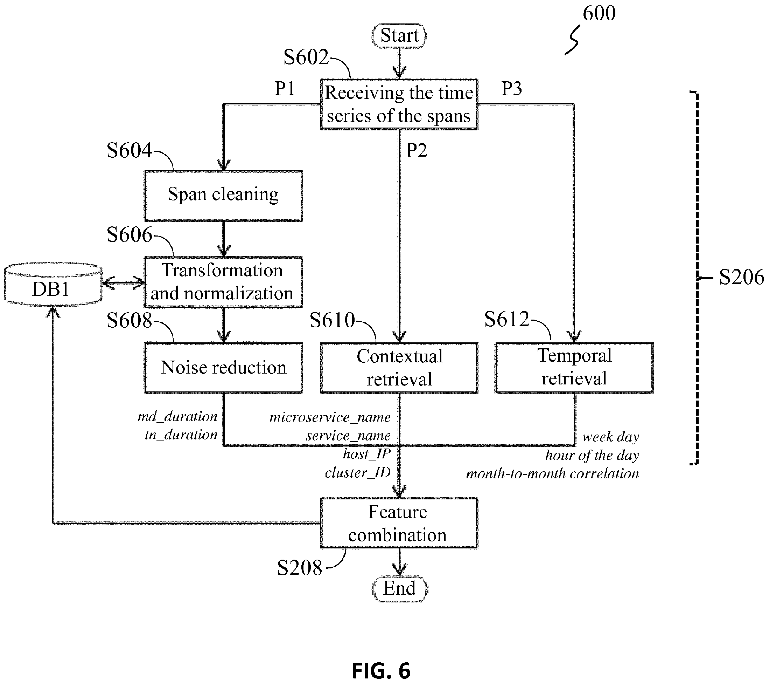

The time series of the spans, which are obtained in the step S204 of the method 200, are further used to study the dynamics of the microservice applications. In particular, such studying is implemented in the step S206 which will be now described together with the step S208 in more detail with reference to Fig. 6.

More specifically, Fig. 6 shows a pipeline flowchart 600 for implementing the steps S206 and S208 of the method 200. The pipeline flowchart 600 starts with step S602 in which the processor 104 of the apparatus 100 receives the time series of the spans, which is obtained in the step S204 of the method 200. After that, the pipeline flowchart 600 divides into three pipelines P1-P3 each aimed at retrieving one type of the features from the time series. In particular, the pipeline P1 is used to retrieve the signal features, the pipeline P2 is used to retrieve the contextual features, and the pipeline P3 is used to retrieve the temporal features. The step S602 and the pipelines P1-P3 constitute the step S206 of the method 200, as schematically shown by a dashed curly bracket in Fig. 6.

In turn, the pipeline P1 comprises three steps S604-S608. The step S604 is a cleaning step required to remove outliers from the time series. The removal of the outliers is essential because the outliers affect negatively the accuracy of the anomaly detection. The cleaning step may be performed by using a generalized extreme studentized deviate (ESD) test. However, the generalized ESD test should not be construed as any limitation of the present disclosure, and may be replaced with any other cleaning techniques depending on particular applications.

It should be noted that the duration of the spans, which is selected in this case as one example of the event property, generally forms a distribution with a positive skewness: the right tail is longer; the mass of the distribution is on the left; asymmetry and values that cannot be negative. Due to the internal working of the deep learning models which the aspects of the present disclosure involves, input data needs to be normalized to achieve convergence. This is the reason for the next step S606 in the pipeline P1, which is a transformation and normalization step. According to the step S606, the duration of the spans is first converted by means of log transformation. This transformation reduces the positive skewness and turns the time series to a Gaussian distribution, which is important for the normalization. The normalization is preferably performed by using min-max scaling to interval [0, 1] since other normalization methods, such as $N(0, 1)$ standardization, might produce negative values that do not a have natural meaning when dealing with the time series. The min-max scaling is defined as follows:

$$X_i' = \frac{X_i - \min(X)}{\max(X) - \min(X)}.$$

The values min($X$) and max($X$) may be saved in a database DB1 residing, for example, in the storage 102 of the apparatus 100. This allows saving computational resources required to calculate the values min($X$) and max($X$) in case of adding a new span to the time series. In other words, it is just enough to check whether the duration value of the new span is within the range of min($X$) to max($X$), and if this is the case, the pre-stored values min($X$) and max($X$) may be used to perform said min-max scaling again.

However, the transformation and normalization, i.e. the step S606, suffer from a significant drawback: information about the scale of the duration is lost. Thus, it is necessary to extract the centrality of the time series to capture the scale of the duration, using a sliding window with a robust measure, i.e. the *median($X$)*. This should be done before applying the log transformation. Let the variable capturing the median centrality be called *md_duration.*

After the normalization, the noise which is present in the spans generated by the microservice applications needs to be reduced to improve the accuracy of the anomaly detection. This is done in the step S608 of the pipeline P1. The step S608 consists in applying a Hamming smoothing filter with a window size $W$ to the duration values:

$$w(n) = 0.54 - 0.46 \cos\left(\frac{2\pi n}{W-1}\right), 0 \leq n \leq W-1$$

The window size $W$ is preferably set to 12 since this value has been found to work well with most types of the microservice applications. Nonetheless, in case of highly volatile applications, the window size $W$ should be increased to values within the range 12-30. Let the variable capturing the transformed signal be called *tn_duration.* Thus, the outcomes of the pipeline P1 are represented by the variables *md_duration* and *tn_duration.*

The pipeline P2 is represented by single step S610 consisting in retrieving the contextual features from the time series. While the step S204 of the method 200 provides the so-called explicit grouping of the spans based on the same property, the contextual features may allow the unsupervised machine learning algorithm to additionally perform the so-called implicit grouping of the spans in the step S210 of the method. This may eventually lead to increasing the accuracy of the anomaly detection. To make it more understandable, let us consider the following example. Assuming that the performance of one host where the microservice application is run affects the duration recorded in the spans generated. Therefore, the property *host_IP* is correlated with the property *duration.* If only the explicit grouping is executed, and provided that the host with $IP_i$ fails, the detection and recognition of unstable or anomolous behaviour becomes difficult since the time series contains distinct overlapping signals coming for distinct hosts ..., $IP_{i-2}$, $IP_{i-1}$, $IP_{i+1}$, $IP_{i+2}$, ....

The spans may have several properties other than the property *duration,* as shown in Fig. 4. For example, the following properties may be extracted to enable the unsupervised machine learning algorithm to further group implicitly the spans:

- *Microservice_name* is the name of the microservice application which generated the span;

- *Service_name* is the name of the service which the microservice application belongs to;

- *Host_IP* is the IP of the host/server in which the microservice application was running when it generated the span;

- *Cluster_ID* is the identifier assigned to the span in the step S204 of the method 200.

These properties may be retrieved as the contextual features that allow the unsupervised machine learning algorithm to additionally perform the implicit grouping of the spans, thereby improving the accuracy of the anomaly detection. The motivation for the implicit grouping is that the explicit grouping (i.e. the step S204) of the spans provides a more general approach to group the spans, but fine-grained, meaningful information can still be hidden.

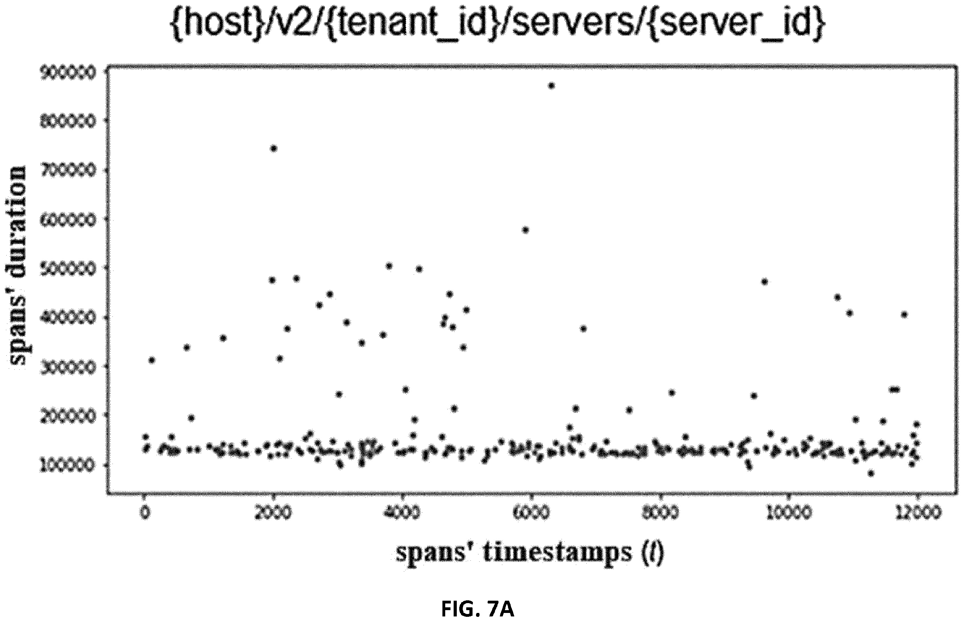

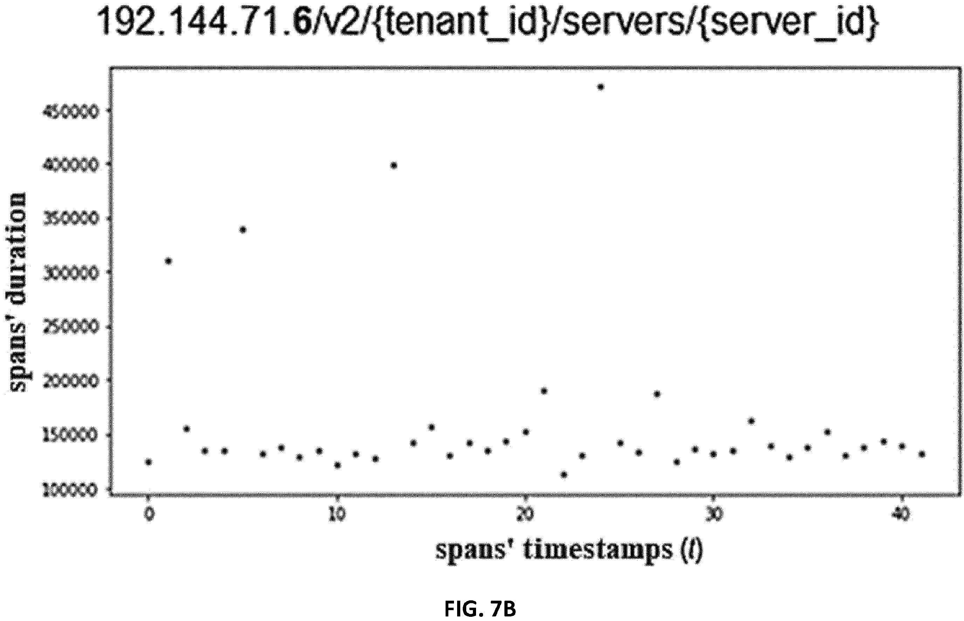

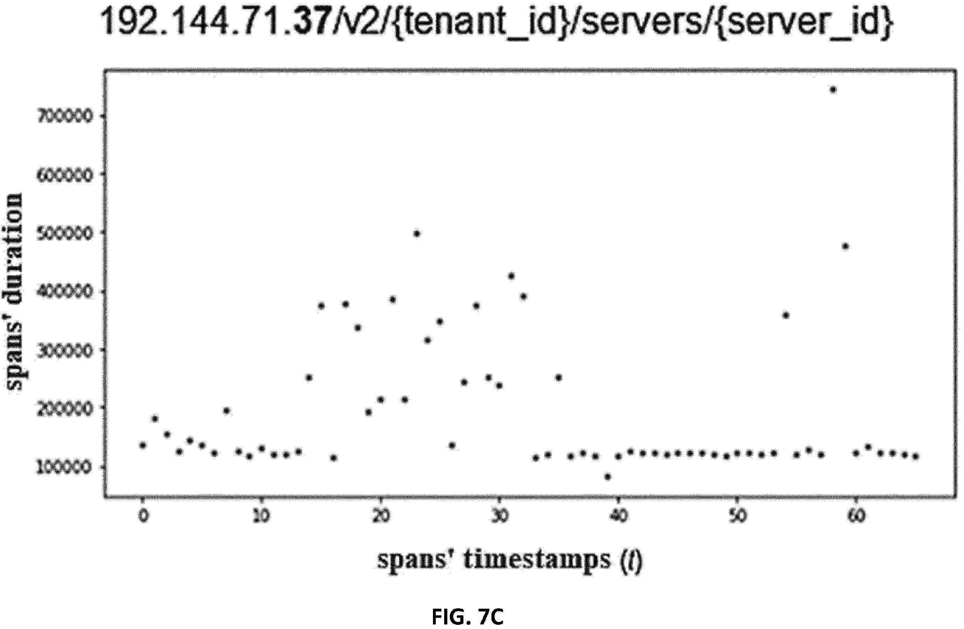

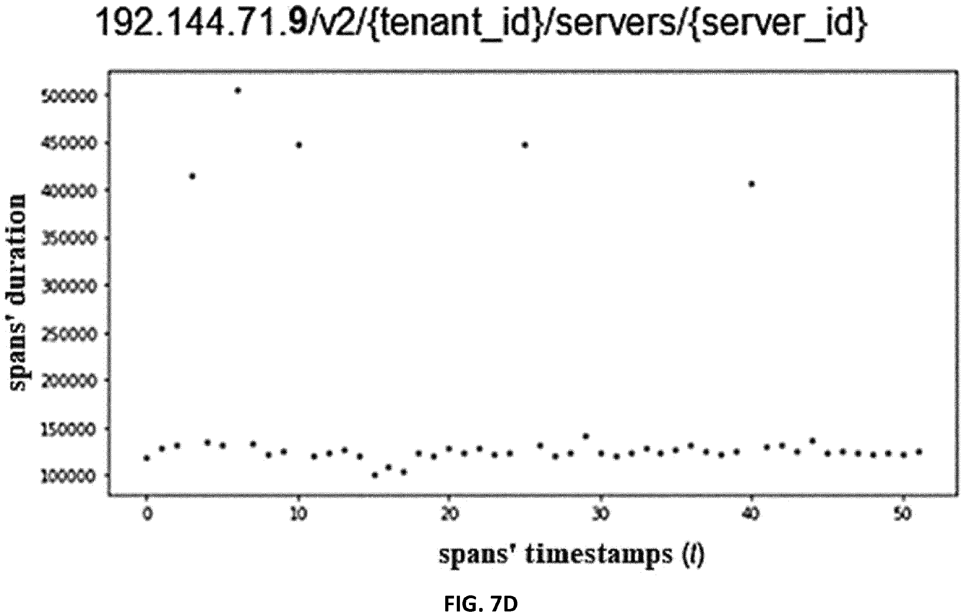

As an example, Figs. 7A-7D illustrate how the implicit grouping of the spans may improve the accuracy of the anomaly detection. More specifically, Fig. 7A shows the time series of the spans representing the pairs of duration-value, which is obtained merely by using the explicit grouping of the spans. The time series has the following *cluster_id: {host}/v2/{tenant_id}/servers/{server_id}.* It is rather difficult to visually find the anomaly within the time series shown in Fig. 7A. However, the situation improves if the spans are further grouped implicitly by using *host_IP.* In particular, Fig. 7C shows that the host having *host_IP:* 192.144.71.37 is unstable, while Figs. 7B and 7D show that the other two hosts having *host_IP:* 192.144.71.6 and 192.144.71.9, respectively, are normal.

Referring back to Fig. 6, the pipeline P3 is represented by single step S612 consisting in retrieving the temporal features from the time series. The temporal features specifies how the property value is correlated with time aspects, such as seasonality. For example, if there is a past lower *duration* value on weekends, it may imply a future lower *duration* value on weekends. In general, since the microservice applications change rapidly over time, they may contain double or triple seasonality. The term "seasonality" refers to variations that occur at specific regular time intervals, such as hourly, daily, weekly, monthly, or quarterly. Multiple seasonality can also be present in the time series. For example, the microservice applications may be characterized by a weekly seasonality (e.g. the microservice applications are used more often during a week) and a daily seasonality (e.g. the microservice applications are used more often during early morning and late afternoon). The temporal features may be retrieved from the property timestamps of the spans in the following format: DD-MM-YYYY HH:MM:SS.MILISECONDS. This format allows the unsupervised machine learning algorithm to additionally extract:

- *Week day* (from 1 to 7) to capture the weekly seasonality.

- *Hour of the day* (from 1 to 24) to capture the daily seasonality.

- *Month-to-month correlation* (from 1 to 12) to capture the monthly seasonality.

The extracted values may be converted using one-hot encodings and used as inputs together with the outcomes of the pipelines P1 and P2 in the step S208 of the method 200 in order to be combined into the feature vector of the time series. The feature vector may be then stored in the database DB1 for further processing.

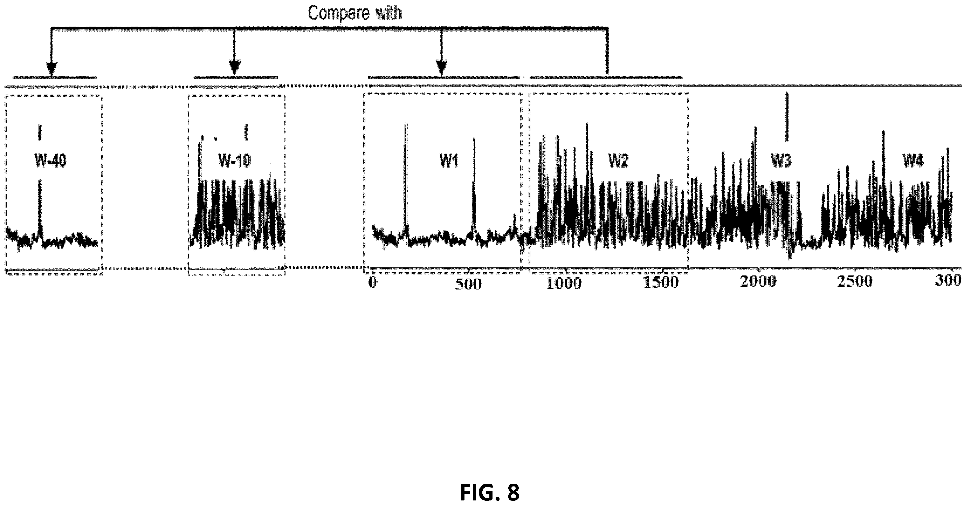

Turning back to the method 200, the step S210 will be now described in more detail with reference to Fig. 8. As noted above, the step S210 involves checking the correspondence of the feature vector of the time series to the baseline model. The baseline model implements one-class classification to model the normal behaviour of the system of interest, thereby assuming that the system of interest is stable most of the time. If there is any deviation from the baseline model, it is concluded that the system of interest becomes unstable or abnormal. In general, the baseline model is obtained based on the analysis of normality for thousands or even millions of different past time series of the spans which are often noisy, seasonal, and non-stationary. For this reason, the aspects of the present disclosure involve using the unsupervised machine learning algorithm to capture different similarities between the plurality of the past time series. It is of great importance that the machine learning algorithm is unsupervised because, in this case, the machine learning algorithm allows minimizing the user involvement, thereby making the anomaly detection almost automated.

Fig. 8 illustrates how the baseline model may be obtained by using a sliding window in concert with the unsupervised machine learning algorithm. It is again assumed that the time series shown in Fig. 8 are related to the microservice applications. The baseline model is learned from the spans generated from the sliding windows W-40 to W1. When the next sliding window W2 is analysed for the anomaly, it is compared with the sliding windows W-40, W39, ..., W0, and W1. The result is that the sliding window W2 is stable since a similar behaviour (for example, similar spikes) was observed in the past, i.e. in the sliding window W-40. In contrast, the existing solutions, such as the ARIMA and ESD methods, would have been able to only store and compare the sliding window W2 with a limited number of the preceding sliding windows to detect the anomaly or normality. This would have led to the generation of a false positive, since when using, for example, the sliding window W1 as a reference point, the sliding window W2 seems to be unstable or anomalous.

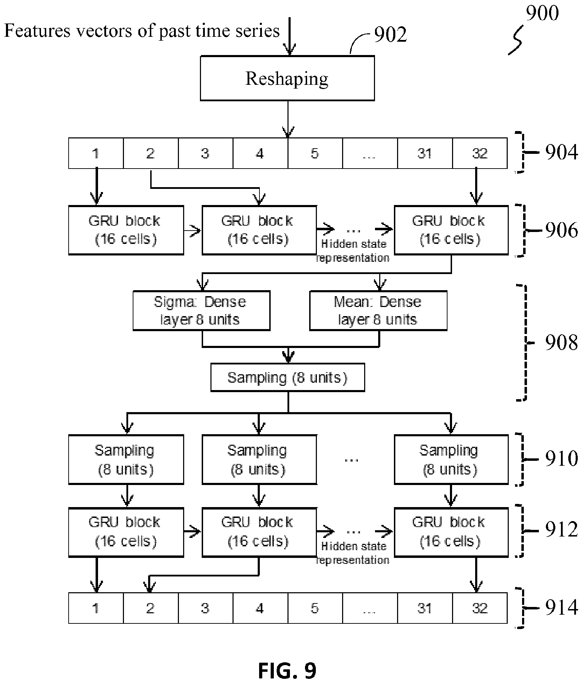

According to the aspects of the present disclosure, the unsupervised machine learning algorithm is performed by using at least one recurrent neural network which is one of the deep learning techniques. Fig. 9 shows an exemplary architecture 900 of the recurrent neural network used to obtain the baseline model. The architecture 900 comprises the following building blocks: a reshaping block 902, an input layer 904, a first hidden layer 906, a sampling layer 908, a repeat layer 910, a second hidden layer 912, and an output layer 914. As should be apparent to those skilled in the art, each of the building blocks of the architecture 900 may be implemented as a software component or module executed by the processor 104 of the apparatus 100. Furthermore, such software components or modules may be then stored in the storage 102 of the apparatus 100, so that the processor 104 may access to the storage 102 to retrieve them in case of updating the baseline model.

The reshaping block 902 is responsible for defining a parameter *window_size* to set the number of the spans encompassed by the sliding window. The recommended *window_size* is 32, but it can be adjusted for the microservice applications which are more volatile. Since the recurrent neural network does not work well with time series of more than 100-300 spans (on longer time series it still works, but can gradually forget information from the oldest spans), the time series is split into smaller sub-sequences. For example, the time series comprising 3000 spans is split into multiple overlapping sub-sequences each comprising 32 spans. This also enables faster learning and provides less information loss.

Thus, the sliding window of a given *window_size* and a stride equal to 1 is applied to the time series, thereby resulting in the following set $Q$ of the sub-sequences of the spans:

$$Q = \begin{bmatrix} x_1 & x_2 & x_2 & ... & x_{window\_size} \\ x_2 & x_3 & x_4 & ... & x_{window\_size+1} \\ x_3 & x_4 & x_5 & ... & x_{window\_size+2} \\ ... & ... & ... & ... & ... \end{bmatrix}.$$

Apparently, each of the sub-sequences has a size equal to *window_size.* For the time series with $N$ spans, a data structure dimension after this procedure is defined as:

$$D = (N - window\_size, \ window\_size, n\_features),$$

where *n_features* are the features included in the feature vector of each past time series. As shown in Fig. 6, these features may contain: *tn_duration*, *md_duration*, *service name, microservice name*, *host_IP*, *day of the week*, *hour of the day*, *month-to-month correlation*, and *cluster_ID.* All the feature vectors are split into two parts, with one used for learning and another (counting 20%) used for validation during the learning operation. The data structure presented as $D$ for each past time series is then fed into the input layer 904 of the recurrent neural network formed by the layers 904-914.

The first hidden layer 906 allows the baseline method to learn from the past. For this purpose, the first hidden layer 906 comprises gated recurrent unit (GRU) cells, the number of which is set to *window_size*/2 for each time step. In general, the GRU cells substantially represent mechanisms to allow "memorizing" information for an extended number of time steps. Each of the *window_size* input is fed to the first hidden layer 906. At the first time step T = 0, the first set of features is fed. For *window_size* = 32 spans, the abstract representation learned in the 16 GRU cells is propagated to the next time step T = 1, where the features of the window are fed. This causes to condition the reconstruction of the next span given the past spans. In such a way, an abstract representation of the window of spans is provided at the last time step. This representation holds salient information for that part of the time series.

The sampling layer 908 consists of *window_size*/4 units which perform sampling from a multivariate normal distribution with a given mean and variance. The mean squared error (MSE) is calculated for each sample of the validation data, and the mean and the variance are estimated for the MSE scores using: $\mu, \delta$ = *fit*_normal(MSE). These parameters will be then used to check how well the predicted distribution fits unseen spans, i.e. it will check how well the following condition holds: *span*$_{unseen}$ $N(\mu, \delta)$.

The repeat layer 910 repeats the sampling layer 908 the *window_size* times, which is needed to be fed into the next layer represented by the second hidden layer 910. The second hidden layer 910 has the same objective as the first hidden layer 906. More specifically, the second hidden layer learns an abstract representation, and its output has the same *window_size* number of input time steps but only with the span duration as the feature. The output layer 914 is then used to encode the abstract representation of the input.

The recommended learning parameters for the recurrent neural network discussed above are the following: maximum 1000 epochs, and an Adam optimizer with a learning rate of 0.001. It is also recommended to use a model checkpoint to save the best baseline model on the validation data during the learning operation. Finally, when the learning operation is finished, the baseline model is stored in a dedicated database in the storage 102 of the apparatus 100.

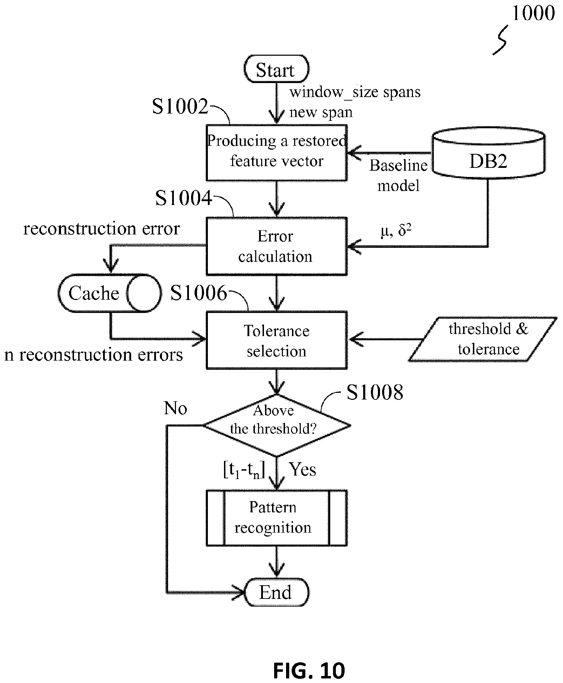

Fig. 10 shows a flowchart 1000 for implementing the step S210 of the method 200. The flowchart 1000 starts with reading, when a new span (i.e. a new event) is generated by the microservice application (which apparently leads to a new time series), the preceding *window_size* number of the spans which are keep in a memory buffer of the apparatus 100 for fast processing: $\{X_{i-ws}, X_{i-ws-1}, ..., X_{i-1}\}$, where ws represents the parameter *window_size*. A total of ($ws$ + 1) spans are read. Given the new span generated at time $t_i$, it is checked whether the new span is presented among the preceding spans. If this is not the case, the flowchart proceeds to step S1002, in which the baseline model is downloaded from the dedicated database, which is denoted as "DB2" in Fig. 10, and used to produce a restored feature vector.

When the restored feature vector is produced, the flowchart 1000 proceeds to step S1004, in which a distance between the restored feature vector and the feature vector of the new time series is calculated. The distance may be calculated by using, for example, a mean squared error (MSE) defined by the following formula:

$$MSE = \frac{1}{window\_size} \sum (x_i - y_i)^2,$$

where $x_i$ is the *duration* of the spans in the new time series, and $y_i$ is the reconstructed *duration*. Additionally, the step S1004 involves calculating a probability density function $p = 1 - P(x > MSE)$, or a cumulative distribution function CDF($x$, $\mu$, $\mathscr{S}^2$), where $p(x)$ is either the Gaussian or the Student's-t distribution. The parameters of the both probability density functions are $\mu$ and $\mathscr{S}^2$ previously calculated and stored in the database DB2. It is preferable to use the Student's-t distribution with 1 degree of freedom since its longer tail, when compared with the Gaussian distribution, increases the range of possible thresholds that work in practice.

In the large-scale microservice applications, there are thousands of the spans recorded in short periods of time. Situations are possible, in which the execution of a microservice call takes more time to execute when compared to the normal behaviour. These situations are often the expression of outliers and do not indicate that the operation of the microservice application is anomalous. The root cause can be a brief bottleneck in input/output operations on a physical disk (the so-called disk IO). Without a proper technique, outliers wrongly trigger the detection of the anomaly. Thus, to eliminate this type of false positives, the flowchart 1000 comprises steps S1006 and S1008 requiring multiple spans to be classified individually as anomalous in the time series before signalling a sustained anomaly. In particular, the step S1006 consists in receiving tolerance and error threshold parameters. The tolerance is a number of anomalous spans that is allowed to be present in the time series in order to consider the time series still normal. In practice, this number ranges from 1 to 100, but it can be adjusted depending on the dynamics of the microservice applications. The outputs $P_{test}$ of the probability density function, which are calculated in the preceding step S1004, are kept in a cache (queue) having a size equal to the tolerance. Each time a new span in the time series is analysed, it is checked in the step S1008 whether the average probability $\frac{1}{Tolerance} \sum_i^{Tolerance} P_{test(i)}$ of all the points in the queue is greater than the error threshold. If this is the case, the time series is considered anomalous in the step S212 of the method 200, and a tuple constituted by the timestamp of the first window and the timestamp of the last window (i.e. [$t_1$ - $t_n$]) characterizing the anomaly may be further used in recognizing the anomaly type, as will be discussed below.

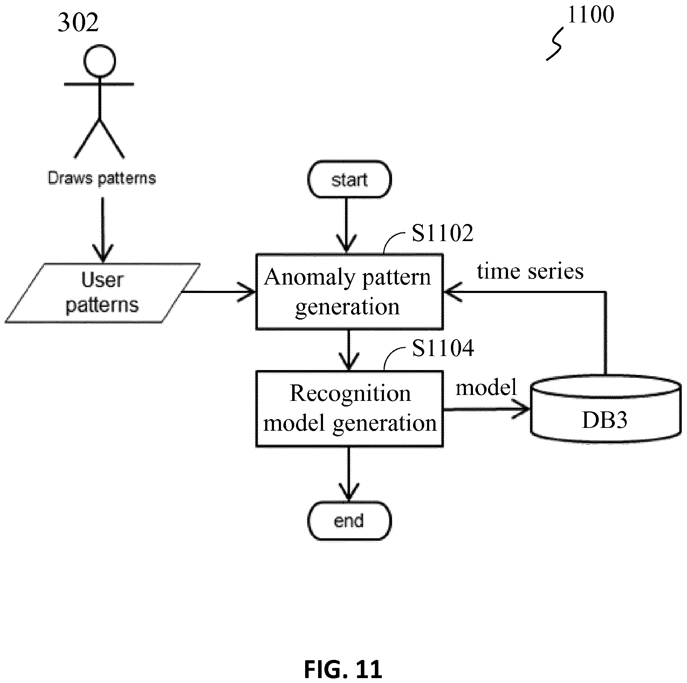

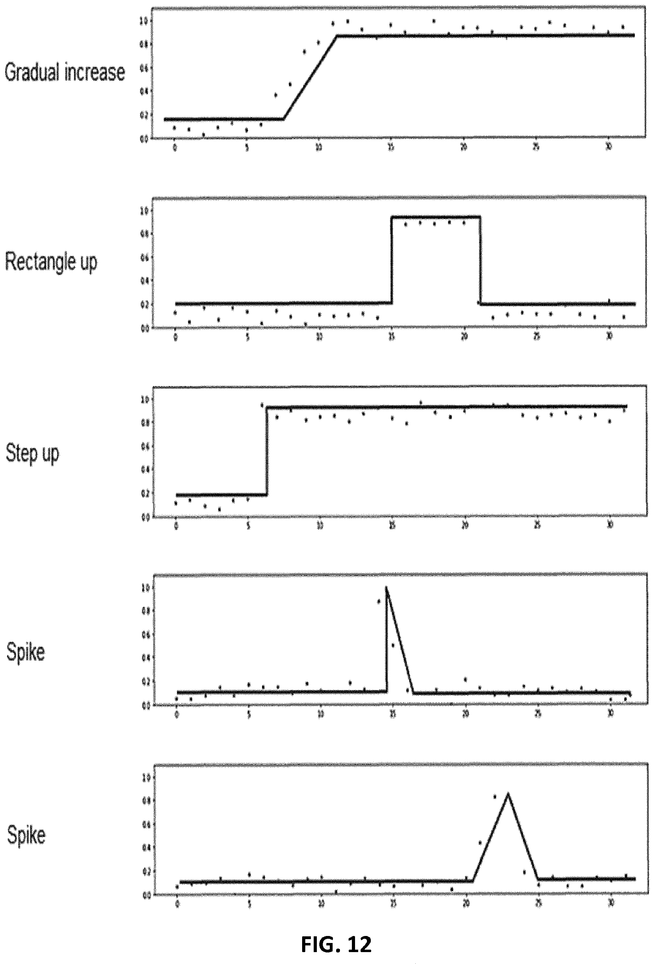

More specifically, said recognizing the anomaly type may be considered as an additional step of the method 200, which is performed by the processor 104 after the anomaly is associated with in the time series in the step S212. However, prior to recognizing the anomaly type, it is required to obtain a recognition model. Fig. 11 shows an exemplary flowchart 1100 for obtaining the recognition model based on user-defined anomaly patterns and their variations. The flowchart 1100 starts with step S1102 consisting in receiving the user-defined anomaly patterns and generating other anomaly patterns based on variations of the user-defined anomaly patterns. The variations of the user-defined anomaly patterns implies the augmentation of the user-defined anomaly patterns with the multiple past time series downloaded from a database DB3 that may be also included in the storage 102 of the apparatus 100. In particular, the augmentation is a technique that is used to artificially expand a dataset of interest. The augmentation may be performed, for example, by using translation and adding a small amount of noise that can be controlled. As for the user-defined anomaly patterns, some example thereof are shown in Fig. 12, including different steps, spikes, gradual changes, etc. In one embodiment, the user-defined anomaly patterns may be initially drawn by the user 302 by using any graphical tool, such, for example, as a stylus, mouse pointer, etc. In this case, the user-defined anomaly patterns should be simply converted into a particular time series of the form $(t_i, v_i)$, where $t_i$ is the time, and $v_i$ is the property value, such as the duration value. Each of the anomaly patterns predefined by the user 302 and generated in the step S1102 corresponds to a separate anomaly class and, in addition, to the normal class. The classes are identified by the *pattern_ID*, which may represent a number from 0 to the number of the anomaly patterns.

When all-possible anomaly patterns are generated, the flowchart 1100 proceeds to step S1104 consists in generating a recognition model based on a supervised machine learning algorithm using the anomaly patterns from the step 51102. The recognition model should define a mapping between the different anomaly patterns and associated time series. The machine learning algorithm used in the step S1104 is supervised because it needs the user input comprising the above-described user-defined anomaly patterns. In one embodiment, the supervised machine learning algorithm is performed by using at least one convolutional neural network. The convolutional neural networks is preferable in this case because this type of neural networks allows reducing a number of parameters to be learned by limiting a number of connections between neurons in a hidden layer to only some of input neurons (which is known as a local receptive field), while being capable of learning salient features of input data.

One suitable architecture of the convolutional neural network may be implemented by using two main building blocks which may be applied repeatedly to provide deeper machine learning. The first building block of the convolutional neural network is represented by a convolutional layer, which is composed by several groups of neurons. These groups of neurons are called filters or kernels, as should be known to those skilled in the art. The groups of neurons act as automatic filters. Each filter has weights that are adjusted during the learning operation. Convolving the input data with the filters produces a feature map. This is especially beneficial when the time series has local properties, for example, sharp peaks, horizontal or vertical edges, intensities and even more, which can be learned by next deeper layers of the convolutional neural network.

The second building block of the convolutional neural network is a pooling layer, which usually is applied to the feature maps after said convolving. The pooling layer allows achieving some translation invariance of learned features. Usually max-pooling is applied to non-overlapping sets of the input feature map and can be interpreted as an automatic feature extraction. The more the convolutaional or pooling layers in the convolutional neural network, the more complex features may be retrieved form the time series to be analysed.

In one embodiment, the convolutional neural network used in the step S 1104 may be designed as follows:

- Input layer (length = window _size, dimension = 1 (i.e. only the property value is considered, such as the duration value with regard to the microservice applications);

- 1st convolutional layer (comprising 16 filters which use the activation function = " ReLu");

- 1st max-pooling layer;

- 2nd convolutional layer (comprising 32 filters which use the activation function = "ReLu");

- 2nd max-pooling layer;

- 3rd convolutional layer (comprising 64 filters which use the activation function = "ReLu");

- 1st dense layer (the activation function of neurons = "tanh");

- 2nd dense layer (the activation function of neurons = "softmax").

This convolutional neural network combines the convolutional and max-pooling layers followed by the tanh and soft-max dense layers that distribute a probability for a given anomaly pattern. The tanh activation function enables to make clear distinctions on class prediction. The soft-max function is a generalized logistic activation function which is used for multiclass classification. Once ready, the recognition model should be stored in the database DB3 for further use.

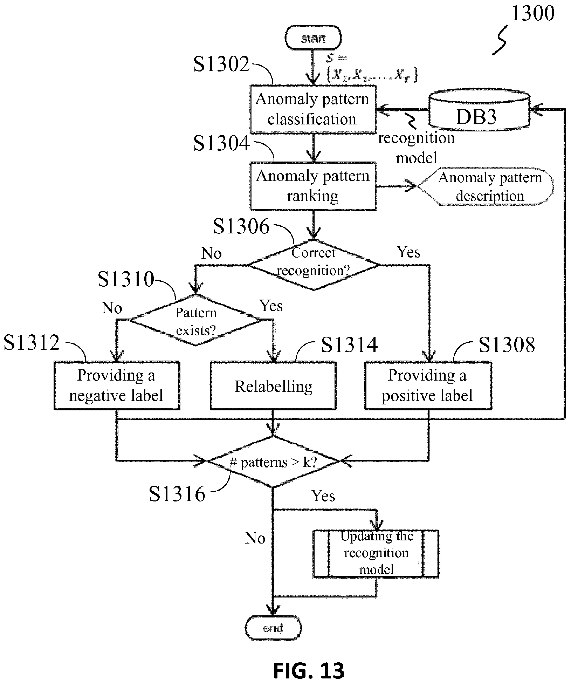

Fig. 13 shows an exemplary flowchart 1300 for recognizing the anomaly associated with the time series. The flowchart 1300 starts with receiving the time series $S = \{X_1, X_2 ... X_T\}$ that is detected as anomalous in the step S212 of the method 200. The time series comprises the multiple spans of the same property, such as the duration or response time for the microservice applications. Further, the flowchart 1300 proceeds to steps S1302 consisting in dividing the received time series into multiple time segments by using a sliding window having a predefined size, and detecting at least one anomaly pattern among time segments by using the recognition model. The size of the sliding window may be equal to one of the same values as discussed above with reference to Fig. 6. As a result of the step S1302, each time segment is provided with the corresponding *pattern_ID*, which indicates the normal class or any one of different anomaly classes, as discussed above. Further, the flowchart 1300 proceeds to step S1304 consisting in ranking the anomaly patterns detected in the step S1302 by their measures of belief. Although the measures of belief are represented by ranks in Fig. 13, this should not be considered as any limitation of the present disclosure, and any other types of the measure of belief may be used depending on particular applications. The step S1304 is used to indicate the most likely anomaly present in the whole time series. As an example, only the first-in-rank anomaly pattern may be selected for the anomalous time series.

Additionally, the flowchart 1300 involves showing the description of the selected anomaly pattern to the user. Such description may comprise information indicating the *pattern_ID*, the start and end spans of the selected anomaly pattern, etc. In one embodiment, the user may use such description to check whether it corresponds to the ground truth, since the anomaly patterns detected in the time series may constitute false positives. For this reason, the flowchart 1300 comprises step S1306, in which the user may indicate whether the recognition has been correct or not. This feedback may be then used to update the recognition model, if required. In general, the following three outcomes are possible:

1) if the first-in-rank anomaly pattern is correctly recognized, it is provided with a positive label in step S1308;

2) if the first-in-rank anomaly pattern is recognized incorrectly and the rest of the ranked anomaly patterns are detected incorrectly (see "No" in step S1310), the first-in-rank anomaly pattern is provided with a negative label in step S1312; and

3) if the first-in-rank anomaly pattern is recognized incorrectly, but at least one other anomaly pattern exist (see "Yes" in the step S1310) - i.e. misclassification has happened - the time series is relabelled with the correct *pattern_ID* in step S1314, and it is stored in the database DB3 for reuse. In other words, said at least one other anomaly pattern is reselected for the time series, instead of the first-in-rank anomaly pattern.

Furthermore, the flowchart 1300 further comprises step S1316, in which it is checked whether a number of times when any one or more of outcomes 1)-3) occur exceeds a predefined threshold *k*. When this number exceeds the threshold *k*, the recognition model should be again learned or refined in accordance with the flowchart 1100 shown in Fig. 11, but now based on the supervised machine learning algorithm using the selected first-in-rank anomaly patterns.

Those skilled in the art should understand that each block or step of the method or flowcharts described herein, or any combinations of the blocks or steps, can be implemented by various means, such as hardware, firmware, and/or software. As an example, one or more of the blocks or steps described above can be embodied by computer executable instructions, data structures, program modules, and other suitable data representations. Furthermore, the computer executable instructions which embody the blocks or steps described above can be stored on a corresponding data carrier and executed by at least one processor like the processor 104 of the apparatus 100. This data carrier can be implemented as any computer-readable storage medium configured to be readable by said at least one processor to execute the computer executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for detecting an anomaly among successive events, wherein the events are related to microservice applications and the method is executed by at least one processor of an apparatus for detecting an anomaly among successive events, the method comprising:

logging(S202) each new event by producing a pair of an event property and an associated property value;

grouping(S204) the pairs with the same event properties into a current time series;

retrieving(S206), from the current time series, signal features indicative of a change pattern of the property values, contextual features indicative of a context where each of the same event properties has been occurred, and temporal features indicative of a time correlation among the property values,

combining(S208) the signal features, the contextual features, and the temporal features into a feature vector,

checking(S210) whether the feature vector of the current time series corresponds to a pre-stored baseline model, the baseline model being obtained based on an unsupervised machine learning algorithm using the feature vectors of multiple past time series comprising the same event properties as the current time series;

associating(S212) the current time series with the anomaly if there is a lack of correspondence between the feature vector and the baseline model.

2. The method of claim 1, wherein said retrieving the signal features comprises:

removing outliers from the current time series;
converting the current time series to a normally distributed and normalized dataset; and
applying a noise reduction operation to the dataset to retrieve the change pattern of the property values.

3. The method of any one of claims 1 or 2, wherein the unsupervised machine learning algorithm is performed by using at least one recurrent neural network.

4. The method of any one of claims 1 to 3, wherein said checking comprises:

producing a restored feature vector based on the baseline model;
estimating a distance between the restored feature vector and the feature vector of the current time series; and
if the distance is above a predefined threshold, determining that there is a lack of correspondence between the feature vector of the current time series and the baseline model.

5. The method of any one of claims 1 to 4, further comprising:

receiving a user input comprising predefined anomaly patterns each characterizing a certain anomaly type;
obtaining a recognition model based on a supervised machine learning algorithm using the predefined anomaly patterns and different variations of the predefined anomaly patterns, the recognition model defining a mapping between the anomaly patterns and associated time series;
recognizing the anomaly type associated with the current time series based on the recognition model.

6. The method of claim 5, wherein the supervised machine learning algorithm is performed by using at least one convolutional neural network.

7. The method of claim 5 or 6, wherein said recognizing comprises:

dividing the current time series into multiple time segments by using a sliding window having a predefined size;
detecting at least one anomaly pattern among time segments by using the recognition model, each of the at least one anomaly pattern being provided with a measure of belief;
ranking the at least one anomaly pattern by the measure of belief; and
selecting the first-in-rank anomaly pattern for the current time series.

8. The method of claim 7, further comprising:

i) providing the first-in-rank anomaly pattern with a positive label if the first-in-rank anomaly pattern is selected correctly; or
ii) providing the first-in-rank anomaly pattern with a negative label if the first-in-rank anomaly pattern is selected incorrectly and the rest of the ranked anomaly patterns are detected incorrectly; or
iii) reselecting any one of the rest of the ranked anomaly patterns for the current time series if the first-in-rank anomaly pattern is selected incorrectly.

9. The method of claim 8, further comprising, if a number of times when any one or more of steps i)-iii) occur exceeds a predefined threshold, modifying the recognition model based on the supervised machine learning algorithm using the selected first-in-rank anomaly patterns.

10. An apparatus for detecting an anomaly among successive events, wherein the events are related to microservice applications, the apparatus comprising:

at least one processor(104), and
a memory(102) coupled to the at least one processor(104) and storing processor-executable instructions(106) which, when executed by the at least one processor(104), cause the at least one processor(104) to:

log each new event by producing a pair of an event property and an associated property value;
group the pairs with the same event properties into a current time series;
retrieve, from the current time series, signal features indicative of a change pattern of the property values, contextual features indicative of a context where each of the same event properties has been occurred, and temporal features indicative of a time correlation among the property values,
combine the signal features, the contextual features, and the temporal features into a feature vector, check whether the feature vector of the current time series corresponds to a pre-stored baseline model, the baseline model being obtained based on unsupervised machine learning algorithm using the feature vectors of multiple past time series comprising the same event properties as the current time series; and associate the current time series with the anomaly if there is a lack of correspondence between the feature vector and the baseline model.

11. The apparatus of claim 10, wherein the at least one processor(104) is configured to retrieve the signal features by:

removing outliers from the current time series;
converting the current time series to a normally distributed and normalized dataset; and
applying a noise reduction operation to the dataset to retrieve the change pattern of the property values.

12. The apparatus of any one of claims 10 or 11, wherein the at least one processor(104) is further configured to preliminarily obtain the baseline model by using at least one recurrent neural network in the unsupervised machine learning algorithm.

13. The apparatus of any one of claims 10 to 12, wherein the at least one processor(104) is configured to check whether the feature vector of the current time series corresponds to a pre-stored baseline model by:

producing a restored feature vector based on the baseline model;
estimating a distance between the restored feature vector and the feature vector of the current time series; and
if the distance is above a predefined threshold, determining that there is a lack of correspondence between the feature vector of the current time series and the baseline model.

**Patentansprüche**

1. Verfahren zum Detektieren einer Anomalie unter aufeinanderfolgenden Ereignissen, wobei sich die Ereignisse auf Mikrodienstanwendungen beziehen und das Verfahren durch mindestens einen Prozessor einer Vorrichtung zum Detektieren einer Anomalie unter aufeinanderfolgenden Ereignissen ausgeführt wird, wobei das Verfahren Folgendes umfasst:

Protokollieren (S202) jedes neuen Ereignisses durch Erzeugen eines Paars einer Ereigniseigenschaft und eines zugeordneten Eigenschaftswerts;
Gruppieren (S204) der Paare mit denselben Ereigniseigenschaften in eine aktuelle Zeitreihe;
Erfassen (S206) aus der aktuellen Zeitreihe von Signalmerkmalen, die ein Änderungsmuster der Eigenschaftswerte angeben, kontextuellen Merkmalen, die einen Kontext angeben, in dem jede derselben Ereigniseigenschaften aufgetreten ist, und zeitlichen Merkmalen, die eine zeitliche Korrelation unter den Eigenschaftswerten angeben,
Vereinigen (S208) der Signalmerkmale, der kontextuellen Merkmale und der zeitlichen Merkmale in einen Merkmalsvektor,
Überprüfen (S210), ob der Merkmalsvektor der aktuellen Zeitreihe einem im Voraus gespeicherten Basismodell entspricht, wobei das Basismodell anhand eines nicht überwachten Maschinenlernalgorithmus unter Verwendung der Merkmalsvektoren mehrerer vergangener Zeitreihen, die dieselben Ereigniseigenschaften wie die aktuelle Zeitreihe besitzen, erhalten wird;
Zuordnen (S212) der aktuellen Zeitreihe zu der Anomalie, wenn es ein Fehlen einer Übereinstimmung zwischen dem Merkmalsvektor und dem Basismodell gibt.

**2.** Verfahren nach Anspruch 1, wobei das Erfassen der Signalmerkmale Folgendes umfasst:

Entfernen von Ausreißern aus der aktuellen Zeitreihe;
Umsetzen der aktuellen Zeitreihe in eine normal verteilte und normierte Datengruppe, und
Anwenden eines Rauschverringerungsvorgangs auf die Datengruppe, um das Änderungsmuster der Eigenschaftswerte zu erfassen.

**3.** Verfahren nach einem der Ansprüche 1 oder 2, wobei der nicht überwachte Maschinenlernalgorithmus durch Verwenden mindestens eines wiederkehrenden neuronalen Netzes ausgeführt wird.

**4.** Verfahren nach einem der Ansprüche 1 bis 3, wobei das Überprüfen Folgendes umfasst:

Erzeugen eines wiederhergestellten Merkmalsvektors anhand des Basismodells;
Schätzen eines Abstands zwischen dem wiederhergestellten Merkmalsvektor und dem Merkmalsvektor der aktuellen Zeitreihe; und
dann, wenn der Abstand über einem vordefinierten Schwellenwert liegt, Bestimmen, dass es ein Fehlen einer Übereinstimmung zwischen dem Merkmalsvektor der aktuellen Zeitreihe und dem Basismodell gibt.

**5.** Verfahren nach einem der Ansprüche 1 bis 4, das ferner Folgendes umfasst:

Empfangen einer Anwendereingabe, die vordefinierte Anomaliemuster umfasst, die jeweils einen bestimmten Anomalietyp kennzeichnen;
Erhalten eines Erkennungsmodells anhand eines überwachten Maschinenlernalgorithmus unter Verwendung der vordefinierten Anomaliemuster und verschiedener Variationen der vordefinierten Anomaliemuster, wobei das Erkennungsmodell eine Abbildung zwischen den Anomaliemustern und zugeordneten Zeitreihen definiert;
Erkennen des Anomalietyps, der der aktuellen Zeitreihe zugeordnet ist, anhand des Erkennungsmodells.

**6.** Verfahren nach Anspruch 5, wobei der überwachte Maschinenlernalgorithmus durch Verwenden mindestens eines neuronalen Faltungsnetzes ausgeführt wird.

**7.** Verfahren nach Anspruch 5 oder 6, wobei das Erkennen Folgendes umfasst:

Unterteilen der aktuellen Zeitreihe in mehrere Zeitsegmente durch Verwenden eines Gleitfensters mit einer vordefinierten Größe;
Detektieren mindestens eines Anomaliemusters unter den Zeitsegmenten durch Verwenden des Erkennungsmodells, wobei jedes des mindestens einen Anomaliemusters mit einem Maß des Glaubens bereitgestellt wird;
Einstufen des mindestens einen Anomaliemusters durch das Maß des Glaubens; und
Auswählen des erstplatzierten Anomaliemusters für die aktuelle Zeitreihe.

**8.** Verfahren nach Anspruch 7, das ferner Folgendes umfasst:

i) Bereitstellen des erstplatzierten Anomaliemusters mit einem positiven Etikett, wenn das erstplatzierte Anomaliemuster korrekt ausgewählt wird; oder
ii) Bereitstellen des erstplatzierten Anomaliemusters mit einem negativen Etikett, wenn das erstplatzierte Anomaliemuster nicht korrekt ausgewählt wird und der Rest der eingestuften Anomaliemuster nicht korrekt detektiert wird; oder
iii) Neuauswählen eines des Rests der eingestuften Anomaliemuster für die aktuelle Zeitreihe, wenn das erstplatzierte Anomaliemuster nicht korrekt ausgewählt wird.

**9.** Verfahren nach Anspruch 8, das ferner umfasst, dann, wenn eine Häufigkeit, wenn einer oder mehrere der Schritte i) - iii) auftreten, einen vordefinierten Schwellenwert übersteigt, das Erkennungsmodell anhand des überwachten Maschinenlernalgorithmus unter Verwendung des ausgewählten erstplatzierten Anomaliemusters zu ändern.

**10.** Vorrichtung zum Detektieren einer Anomalie unter aufeinanderfolgenden Ereignissen, wobei sich die Ereignisse auf Mikrodienstanwendungen beziehen, wobei die Vorrichtung Folgendes umfasst:

mindestens einen Prozessor (104) und
einen Speicher (102), der an den mindestens einen Prozessor (104) gekoppelt ist und prozessorausführbare Anweisungen (106) speichert, die dann, wenn sie durch den mindestens einen Prozessor (104) ausgeführt werden, bewirken, dass der mindestens eine Prozessor (104):

jedes neue Ereignis durch Erzeugen eines Paars einer Ereigniseigenschaft und eines zugeordneten Eigenschaftswerts protokolliert;
die Paare mit denselben Ereigniseigenschaften in eine aktuelle Zeitreihe gruppiert;
aus der aktuellen Zeitreihe Signalmerkmale, die ein Änderungsmuster der Eigenschaftswerte angeben, kontextuelle Merkmale, die einen Kontext angeben, in dem jede derselben Ereigniseigenschaften aufgetreten ist, und zeitliche Merkmale, die eine Zeitkorrelation unter den Eigenschaftswerten angeben, erfasst, die Signalmerkmale, die kontextuellen Merkmale und die zeitlichen Merkmale in einen Merkmalsvektor vereinigt,
überprüft, ob der Merkmalsvektor der aktuellen Zeitreihe einem im Voraus gespeicherten Basismodell entspricht, wobei das Basismodell anhand eines nicht überwachten Maschinenlernalgorithmus unter Verwendung der Merkmalsvektoren mehrerer vergangener Zeitreihen, die dieselben Ereigniseigenschaften wie die aktuelle Zeitreihe besitzen, erhalten wird; und
die aktuelle Zeitreihe der Anomalie zuordnet, wenn es ein Fehlen einer Übereinstimmung zwischen dem Merkmalsvektor und dem Basismodell gibt.

**11.** Vorrichtung nach Anspruch 10, wobei der mindestens eine Prozessor (104) konfiguriert ist, die Signalmerkmale durch Folgendes zu erfassen:

Entfernen von Ausreißern aus der aktuellen Zeitreihe;
Umsetzen der aktuellen Zeitreihe in eine normal verteilte und normierte Datengruppe, und Anwenden eines Rauschverringerungsvorgangs auf die Datengruppe, um das Änderungsmuster der Eigenschaftswerte zu erfassen.

**12.** Vorrichtung nach einem der Ansprüche 10 oder 11, wobei der mindestens eine Prozessor (104) ferner konfiguriert ist, das Basismodell durch Verwenden mindestens eines wiederkehrenden neuronalen Netzes in dem nicht überwachten Maschinenlernalgorithmus vorläufig zu erhalten.

**13.** Vorrichtung nach einem der Ansprüche 10 bis 12, wobei der mindestens eine Prozessor (104) konfiguriert ist, zu überprüfen, ob der Merkmalsvektor der aktuellen Zeitreihe einem im Voraus gespeicherte Basismodells entspricht durch:

Erzeugen eines wiederhergestellten Merkmalsvektors anhand des Basismodells;
Schätzen eines Abstands zwischen dem wiederhergestellten Merkmalsvektor und dem Merkmalsvektor der aktuellen Zeitreihe; und
dann, wenn der Abstand über einem vordefinierten Schwellenwert liegt, Bestimmen, dass es ein Fehlen einer Übereinstimmung zwischen dem Merkmalsvektor der aktuellen Zeitreihe und dem Basismodell gibt.

**Revendications**

**1.** Procédé de détection d'une anomalie parmi des événements successifs, les événements étant liés à des applications de microservice et le procédé étant exécuté par au moins un processeur d'un appareil de détection d'une anomalie parmi des événements successifs, le procédé comprenant :

la journalisation (S202) de chaque nouvel événement en produisant une paire d'une propriété d'événement et d'une valeur de propriété associée ;
le regroupement (S204) des paires ayant les mêmes propriétés d'événement en une série chronologique actuelle ;
la récupération (S206), à partir de la série chronologique actuelle, de caractéristiques de signal indicatives d'un motif de changement des valeurs de propriété, de caractéristiques contextuelles indicatives d'un contexte où chacune des mêmes propriétés d'événement a été rencontrée, et de caractéristiques temporelles indicatives d'une corrélation temporelle parmi les valeurs de propriété,

la combinaison (S208) des caractéristiques de signal, des caractéristiques contextuelles, et des caractéristiques temporelles en un vecteur de caractéristiques,

la vérification (S210) si le vecteur de caractéristiques de la série chronologique actuelle correspond à un modèle de ligne de base pré-stocké, le modèle de ligne de base étant obtenu sur la base d'un algorithme d'apprentissage par machine non supervisé à l'aide des vecteurs de caractéristiques de multiples séries chronologiques passées comprenant les mêmes propriétés d'événement que la série chronologique actuelle ;

l'association (S212) de la série chronologique actuelle à l'anomalie s'il existe un manque de correspondance entre le vecteur de caractéristiques et le modèle de ligne de base.

2. Procédé selon la revendication 1, dans lequel ladite récupération des caractéristiques de signal comprend :

l'élimination de valeurs aberrantes de la série chronologique actuelle ;

la conversion de la série chronologique actuelle en un ensemble de données normalement distribué et normalisé ; et

l'application d'une opération de réduction de bruit à l'ensemble de données pour récupérer le motif de changement des valeurs de propriété.

3. Procédé selon l'une quelconque des revendications 1 ou 2, dans lequel l'algorithme d'apprentissage par machine non supervisé est réalisé à l'aide d'au moins un réseau neuronal récurrent.

4. Procédé selon l'une quelconque des revendications 1 à 3, dans lequel ladite vérification comprend :

la production d'un vecteur de caractéristiques restauré sur la base du modèle de ligne de base ;

l'estimation d'une distance entre le vecteur de caractéristiques restauré et le vecteur de caractéristiques de la série chronologique actuelle ; et

si la distance est supérieure à un seuil prédéfini, la détermination qu'il y a un manque de correspondance entre le vecteur de caractéristiques de la série chronologique actuelle et le modèle de ligne de base.

5. Procédé selon l'une quelconque des revendications 1 à 4, comprenant en outre :

la réception d'une entrée d'utilisateur comprenant des motifs d'anomalie prédéfinis caractérisant chacun un certain type d'anomalie ;

l'obtention d'un modèle de reconnaissance sur la base d'un algorithme d'apprentissage par machine supervisé à l'aide des motifs d'anomalie prédéfinis et de différentes variations des motifs d'anomalie prédéfinis, le modèle de reconnaissance définissant un mappage entre les motifs d'anomalie et la série chronologique associée ;

la reconnaissance du type d'anomalie associé à la série chronologique actuelle sur la base du modèle de reconnaissance.

6. Procédé selon la revendication 5, dans lequel l'algorithme d'apprentissage par machine supervisé est réalisé à l'aide d'au moins un réseau neuronal convolutif.

7. Procédé selon la revendication 5 ou 6, dans lequel ladite reconnaissance comprend :

la division de la série chronologique actuelle en de multiples segments temporels à l'aide d'une fenêtre coulissante ayant une taille prédéfinie ;

la détection d'au moins un motif d'anomalie parmi des segments temporels à l'aide du modèle de reconnaissance, chacun de l'au moins un motif d'anomalie étant pourvu d'une mesure de croyance ;

le classement de l'au moins un motif d'anomalie selon la mesure de croyance ; et

la sélection du motif d'anomalie de premier rang pour la série chronologique actuelle.

8. Procédé selon la revendication 7, comprenant en outre :

i) le fait de munir le motif d'anomalie de premier rang d'une étiquette positive si le motif d'anomalie de premier rang est sélectionné de façon correcte ; ou

ii) le fait de munir le motif d'anomalie de premier rang d'une étiquette négative si le motif d'anomalie de premier rang est sélectionné de façon incorrecte et que le reste des motifs d'anomalie classés sont détectés de façon incorrecte ; ou

iii) la resélection de l'un quelconque du reste des motifs d'anomalie classés pour la série chronologique actuelle si le motif d'anomalie de premier rang est sélectionné de façon incorrecte.

9. Procédé selon la revendication 8, comprenant en outre, si un nombre de fois où une quelconque ou plusieurs des étapes i) à iii) surviennent dépasse un seuil prédéfini, la modification du modèle de reconnaissance sur la base de l'algorithme d'apprentissage par machine supervisé à l'aide des motifs d'anomalie de premier rang sélectionnés.

10. Appareil de détection d'une anomalie parmi des événements successifs, les événements étant liés à des applications de microservice, l'appareil comprenant :

au moins un processeur (104), et

une mémoire (102) couplée à l'au moins un processeur (104) et stockant des instructions exécutables par processeur (106) qui, lorsqu'elles sont exécutées par l'au moins un processeur (104), amènent l'au moins un processeur (104) à :

journaliser chaque nouvel événement en produisant une paire d'une propriété d'événement et d'une valeur de propriété associée ;

regrouper les paires ayant les mêmes propriétés d'événement en une série chronologique actuelle ;

récupérer, à partir de la série chronologique actuelle, des caractéristiques de signal indicatives d'un motif de changement des valeurs de propriété, des caractéristiques contextuelles indicatives d'un contexte où chacune des mêmes propriétés d'événement a été rencontrée, et des caractéristiques temporelles indicatives d'une corrélation temporelle parmi les valeurs de propriété,

combiner les caractéristiques de signal, les caractéristiques contextuelles, et les caractéristiques temporelles en un vecteur de caractéristiques,

vérifier si le vecteur de caractéristiques de la série chronologique actuelle correspond à un modèle de ligne de base pré-stocké, le modèle de ligne de base étant obtenu sur la base d'un algorithme d'apprentissage par machine non supervisé à l'aide des vecteurs de caractéristiques de multiples séries chronologiques passées comprenant les mêmes propriétés d'événement que la série chronologique actuelle ; et

associer la série chronologique actuelle à l'anomalie s'il existe un manque de correspondance entre le vecteur de caractéristiques et le modèle de ligne de base.

11. Appareil selon la revendication 10, dans lequel l'au moins un processeur (104) est configuré pour récupérer les caractéristiques de signal en :

éliminant des valeurs aberrantes de la série chronologique actuelle ;

convertissant la série chronologique actuelle en un ensemble de données normalement distribué et normalisé ; et

appliquant une opération de réduction de bruit à l'ensemble de données pour récupérer le motif de changement des valeurs de propriété.

12. Appareil selon l'une quelconque des revendications 10 ou 11, dans lequel l'au moins un processeur (104) est en outre configuré pour obtenir au préalable le modèle de ligne de base à l'aide d'au moins un réseau neuronal récurrent dans l'algorithme d'apprentissage par machine non supervisé.

13. Appareil selon l'une quelconque des revendications 10 à 12, dans lequel l'au moins un processeur (104) est configuré pour vérifier si le vecteur de caractéristiques de la série chronologique actuelle correspond à un modèle de ligne de base pré-stocké en :

produisant un vecteur de caractéristiques restauré sur la base du modèle de ligne de base ;

estimant une distance entre le vecteur de caractéristiques restauré et le vecteur de caractéristiques de la série chronologique actuelle ; et

si la distance est supérieure à un seuil prédéfini, déterminant qu'il y a un manque de correspondance entre le vecteur de caractéristiques de la série chronologique actuelle et le modèle de ligne de base.

**FIG. 1**

EP 3 871 120 B1

S202

Logging each new event by producing a pair of an event property and an associated property value

S204

Grouping the pairs with the same event properties into a current time series

S206

Retrieving signal features, contextual features and temporal features from the current time series

S208

Combining the signal features, the contextual features, and the temporal features into a feature vector

S210

Checking whether the feature vector of the current time series corresponds to a pre-stored baseline model

S212

Associating the current time series with the anomaly if there is a lack of correspondence between the feature vector and the baseline model

200

**FIG. 2**

**FIG. 3**

Span name = RPC
Span ID = 432903
Trace ID = 502123
Parent ID = 389287
Endpoint: http://192.145.50.81:540/a1/b1/c1/list_vms

timestamp: 1538219976
Service name: nova
Microservice name = nova-api
Host ID: 192.145.50.81
Cluster ID: cid182736
Payload: {...}

Time

Annotations                    timestamps

| Client Start | Client Send | Server Recv | Server Output | Server Send | Client Recv | Client End |

**FIG. 4**

EP 3 871 120 B1

cluster_id: {host}/v2/{tenant_id}/servers/{server_id}

**Span**

Span name = RPC
Span ID = 432903
Trace ID = 502123
Parent ID = 389287
Endpoint: http://192.145.50.81/v2/123/servers/987
Host_IP: 192.144.41.121
Name: nova.compute.api.API.get_all
Project: nova-casdading
Client start: 1519257606135000
Client end: 1519257606137000
Duration: 15500

**Cluster id: {host}/v2/{tenant_id}/servers/{server_id}**

**FIG. 5**

**FIG. 6**

{host}/v2/{tenant_id}/servers/{server_id}

spans' duration

spans' timestamps (*t*)

FIG. 7A

# 192.144.71.6/v2/{tenant_id}/servers/{server_id}

**FIG. 7B**

192.144.71.37/v2/{tenant_id}/servers/{server_id}

**FIG. 7C**

192.144.71.9/v2/{tenant_id}/servers/{server_id}

FIG. 7D

EP 3 871 120 B1

FIG. 8

FIG. 9

FIG. 10

FIG. 11

EP 3 871 120 B1

**FIG. 12**

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2018039555 A1